# EUROPÄISCHE PATENTSCHRIFT

(11) **EP 1 755 886 B1**
(45) Veröffentlichungstag und Bekanntmachung des Hinweises auf die Patenterteilung: **07.11.2007**
(21) Anmeldenummer: 05749561.6
(22) Anmeldetag: 31.05.2005
(51) Int. Cl.: B32B 15/08, B32B 37/00, B29C 44/12, B29C 44/34

(54) **VERBUNDELEMENTE**
COMPOSITE ELEMENTS
ELEMENTS COMPOSITES

(30) Priorität: 04.06.2004 DE 102004027417
(43) Veröffentlichungstag der Anmeldung: 28.02.2007
(73) Patentinhaber: BASF Aktiengesellschaft, 67056 Ludwigshafen (DE)
(72) Erfinder: REINDL, Armin, 80639 München (DE); SANDBANK, Thomas, 80798 München (DE)
(86) Internationale Anmeldenummer: PCT/EP2005/005834
(87) Internationale Veröffentlichungsnummer: WO 2005/118284

(56) Entgegenhaltungen:
- DE-A1- 10 056 377

## Beschreibung

Die Erfindung betrifft Verfahren zur Herstellung von Verbundelementen, die die folgende Schichtstruktur aufweisen:
(i) 1 mm bis 20 mm, bevorzugt 2 mm bis 10 mm, besonders bevorzugt 3 mm bis 10 mm, insbesondere 5 mm bis 10 mm Metall, Kunststoff oder mineralischer Werkstoff,
(ii) 5 mm bis 300 mm, bevorzugt 10 mm bis 100 mm, besonders bevorzugt 10 mm bis 60 mm, insbesondere 10 mm bis 30 mm Kunststoff, bevorzugt Polyisocyanat-Polyadditionsprodukte, besonders bevorzugt Polyurethan,
(iii) 1 mm bis 20 mm, bevorzugt 2 mm bis 10 mm, besonders bevorzugt 3 mm bis 10 mm, insbesondere 5 mm bis 10 mm Metall.

Des weiteren bezieht sich die Erfindung auf Schiffselemente, besonders bevorzugt Schiffwand oder insbesondere Deck eines Schiffes, bevorzugt eines Tankschiffes oder eines Passagierschiffes, oder Ölplattformen oder Pontons oder Brücken, Brückenelemente oder Bauwerke enthaltend die erfindungsgemäß erhältlichen Verbundelemente. Die zu den Schichten (i), (ii) und (iii) dargestellten Längenangaben beziehen sich auf die Dicke der jeweiligen Schichten.

Für die Konstruktion von Schiffen, beispielsweise Schiffsrümpfen und Laderaumabdeckungen, Brücken, Dächern oder Hochhäusern müssen Konstruktionsteile verwendet werden, die erheblichen Belastungen durch äußere Kräfte standhalten können. Derartige Konstruktionsteile bestehen aufgrund dieser Anforderungen üblicherweise aus Metallplatten oder Metallträgern, die durch eine entsprechende Geometrie oder geeignete Verstrebungen verstärkt sind. So bestehen Schiffsrümpfe von Tankschiffen aufgrund von erhöhten Sicherheitsnormen üblicherweise aus einem inneren und einem äußeren Rumpf, wobei jeder Rumpf aus 15 mm dicken Stahlplatten, die durch ca. 2 m lange Stahlverstrebungen miteinander verbunden sind, aufgebaut ist. Da diese Stahlplatten erheblichen Kräften ausgesetzt sind, werden sowohl die äußere, als auch die innere Stahlhülle durch aufgeschweißte Verstärkungselemente versteift. Nachteilig an diesen klassischen Konstruktionsteilen wirken sich sowohl die erheblichen Mengen an Stahl aus, die benötigt werden, als auch die zeit- und arbeitsintensive Herstellung. Zudem weisen derartige Konstruktionsteile ein erhebliches Gewicht auf, wodurch sich eine geringere Tonnage der Schiffe und ein erhöhter Treibstoffbedarf ergibt. Zusätzlich sind solche klassischen Konstruktionselemente auf der Basis von Stahl sehr pflegeintensiv, da sowohl die äußeren Oberfläche, als auch die Oberflächen der Stahlteile zwischen der äußeren und inneren Hülle regelmäßig gegen Korrosion geschützt werden müssen.

Als Ersatz für die Stahlkonstruktionen sind SPS-Elemente (Sandwich-Plate-System) bekannt, die einen Verbund aus Metall und Kunststoff beinhalten. Durch die Haftung des Kunststoffs an den zwei Metallschichten entstehen Verbundelemente mit außerordentlichen Vorteilen gegenüber bekannten Stahl Konstruktionen. Derartige SPS-Elemente sind bekannt aus den Schriften US 6 050 208, US 5 778 813, DE-A 198 25 083, DE-A 198 25 085, DE-A 198 25 084, DE-A 198 25 087 und DE-A 198 35 727.

DE-A-100 56 377 offenbart ein Verfahren zur Herstellung von Verbundelementen, die die folgende Schichtstruktur aufweisen:
(i) 2 bis 20 mm Metall;
(ii) 10 bis 300 mm Kunststoff;
(iii) 2 bis 20 mm Metall,

Die Schichtstruktur ist dadurch gekennzeichnet, dass man die Metallschichten (i) und (iii) derart fixiert, dass zwischen ihnen der Raum (R) für die Schicht (ii) gebildet wird, (R) mit Ausnahme mindestens einer Öffnung zur Befüllung von (R) sowie mindestens einer weiteren Öffnung abdichtet und vor der Befüllung von (R) mit den Ausgangskomponenten zur Herstellung von (ii) die Abdichtung durch Druckdifferenzmessung an den Öffnungen überprüft.

Eine besondere Anforderung besteht, wenn entsprechende Verbundelemente innerhalb von bestehenden Strukturen oder Bauwerken hergestellt werden müssen. Aufgrund der baulichen Voraussetzungen kann es von deutlichem Vorteil sein, entsprechende Verbundelemente von unten zu fertigen, d.h. insbesondere die flüssigen Ausgangskomponenten zur Herstellung der Kunststoffschicht (ii) von unten in einen im wesentlichen durch horizontal ausgerichtete Schichten (i) und (iii) gebildeten Raum zu füllen, Dies kann z.B. der Fall sein, wenn die Unterseite von Bauwerken dadurch repariert werden soll, dass man unterhalb der Unterseite (der Schicht (i)) des Bauwerkes eine weitere Schicht fixiert (die Schicht (iii)), zwischen den beiden Schichten (i) und (iii) einen Raum lässt der mit (ii) ausgefüllt werden soll und den Raum zwischen (i) und (iii) füllt, ohne die Schicht (i), d.h. das Bauwerk zu beschädigen.

Der vorliegenden Erfindung lag daher die Aufgabe zugrunde, Verfahren zur Herstellung der eingangs dargestellten Verbundelemente, bei denen die Schicht (ii) bevorzugt haftend mit den Schichten (i) und (iii) verbunden ist, zu entwickeln, durch die es ermöglicht wird, Verbundelement zu fertigen, deren mit (ii) zu befüllender Raum zwischen den Schichten (i) und (iii) nicht von oben zugänglich ist.

Diese Aufgabe wurde dadurch gelöst, dass man in den Raum, der zwischen der im wesentlichen horizontal ausgerichteten oberen Schicht (i) und der im wesentlichen horizontal ausgerichteten unteren Schicht (iii) gebildet wird und der bevorzugt seitlich abgedichtet ist, durch mindestens eine Öffnung (v) in der unteren Schicht (iii) flüssige Ausgangskomponenten zur Herstellung von (ii) füllt und die von den flüssigen Ausgangskomponenten verdrängte Luft durch mindestens eine weitere Öffnung (iv) in der unteren Schicht (iii) entweicht, wobei an dem Rand der Öffnung (iv) eine Wand, bevorzugt ein Rohr (x) befestigt ist, deren obere Kante sich bis auf eine Entfernung zwischen 0 mm und 6 mm, bevorzugt 0,2 mm bis 6 mm, besonders bevorzugt 0,2 mm und 3 mm der zur Schicht (ii) gerichteten Oberfläche der oberen Schicht (i) nähert, wobei zwischen der oberen Kante der Wand (x) und der zur Schicht (ii) gerichteten Oberfläche der Schicht (i) eine Öffnung verbleibt, durch die die verdrängte Luft entweichen kann.

Das erfindungsgemäße Verfahren zeichnet sich dadurch aus, dass ein Befüllen des Raumes mit den Ausgangskomponenten zur Herstellung von (ii) von unten möglich ist und außerdem die entweichende Luft abgeführt werden kann, ohne die obere Schicht zu beschädigen. Wenn der Raum zwischen den Schichten (i) und (iii), der bevorzugt seitlich derart abgedichtet wird, dass ein Herauslaufen der flüssigen Ausgangskomponenten verhindert wird, mit den flüssigen Ausgangskomponenten zur Herstellung von (ii) gefüllt wird, strömt die verdrängte Luft aus dem bevorzugten Rohr und der Raum füllt sich, bis auch flüssige Ausgangskomponenten durch das bevorzugte Rohr austreten. Aufgrund des schmalen Spaltes zwischen der Unterseite der oberen Schicht (i) und der Oberkante des bevorzugten Rohres läuft der Raum allerdings erst durch das Rohr über, wenn die flüssigen Komponenten bereits in Kontakt mit der Unterseite der oberen Schicht (i) stehen.

Nach dem vollständigen Befüllen des Raumes mit (ii), d.h. nach dem Überlaufen durch das bevorzugte Rohr, können die Öffnungen (iv) und (v) verschlossen, z.B. verschraubt werden.

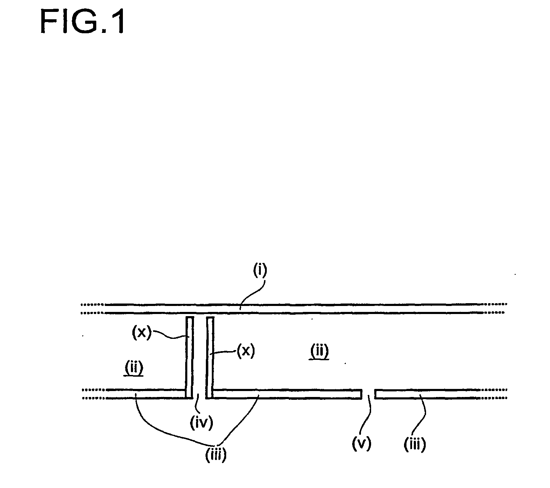

Eine beispielhafte Darstellung der erfindungsgemäßen Anordnung von (i), (ii), (iii), (iv), (v) und (x) ist in der Figur 1 dargestellt.

Der Abstand der oberen Kante der Wand (x), bevorzugt des Rohres zur Unterseite der oberen Schicht (i) kann variieren. Dabei kann ein Teil der Kante sogar an die Unterseite der oberen Schicht (i) stoßen. Wesentlich ist lediglich, dass zwischen der Wand (x) und der Schicht (i) eine Öffnung verbleibt, durch die von den flüssigen Ausgangskomponenten verdrängte Luft aus dem zu befüllenden Raum zwischen (i) und (iii) entweichen kann. Aufgrund des erfindungsgemäßen, geringen Abstandes zwischen Kante und Schicht (i) ist es möglich, den Raum von unten zu entlüften, d.h. die obere Schicht (i) nicht zu beschädigen, und dennoch den Raum vollständig zu befüllen, d.h. bis die flüssigen Ausgangskomponenten zur Herstellung der Schicht (ii) in Kontakt mit der Schicht (i) stehen.

Bei der erfindungsgemäßen Wand (x) kann es sich um eine beliebig geformte Wand handeln. So kann die Wand, die bevorzugt mit der Öffnung (iv) dicht verbunden ist, so dass zwischen der Schicht (iii) und der Wand keine flüssigen Ausgangskomponenten zur Herstellung von (ii) auslaufen können, einen kreisrunden, ovalen oder eckigen Querschnitt haben. Bevorzugt handelt es sich bei der Wand (x) um ein Rohr, besonders bevorzugt um ein Rohr, das in die Öffnung (iv) geschoben und anschließend dicht mit der Kante der Öffnung (iv) verbunden wird, bevorzugt mit der Schicht (iii) verschweißt wird. Besonders bevorzugt kann es sich bei der Wand um ein Rohr handeln, das in die Öffnung (iv) geschraubt wird, z.B. indem die Kante der Schicht (iii) in der Öffnung (iv) ein Gewinde aufweist, in das das Rohr, das auf seiner Mantelfläche ein entsprechendes Gewinde aufweist, geschraubt wird.

Die Öffnung (iv) kann bevorzugt eine runde Grundfläche und bevorzugt einen Durchmesser zwischen 8 mm und 30 mm aufweisen, bevorzugt zwischen 10 mm und 25 mm.

Üblicherweise kann man das Verfahren derart durchführen, dass man nach der Erzeugung der Erhebungen die Schichten (i) und (iii) fixiert und anschließend den Raum zwischen (i) und (iii) mit flüssigen Ausgangskomponenten zur Herstellung von (ii) füllt. Dabei wird man bevorzugt den mit den flüssigen Ausgangskomponenten zur Herstellung von (ii) zu füllenden Raum zwischen den Schichten (i) und (iii) mit Ausnahmen von Öffnungen (v), die dem Befüllen mit den Ausgangskomponenten zur Herstellung von (ii) dienen, derart abdichten, dass ein unerwünschtes Herauslaufen der flüssigen Ausgangskomponenten verhindert wird, und anschließend die flüssigen Ausgangskomponenten zur Herstellung von (ii) in den zu befüllenden Raum einfüllen. Das Abdichten kann nach allgemein bekannten Verfahren erfolgen, z.B. indem man seitliche Ränder zwischen die Schichten (i) und (iii) verklebt oder verschweißt. Bei der oberen Schicht (i) kann es sich bevorzugt um die Unterseite eines bevorzugt bereits existierenden Bauwerkes handeln. Dies bedeutet, dass besonders bevorzugt an die Unterseite eines existierenden Bauwerkes als Schicht (i) in einem Abstand, der die Dicke der Schicht (ii) definiert, die Schicht (iii) fixiert wird und anschließend besonders bevorzugt die seitlichen Ränder des Raumes zwischen (i) und (iii), d.h. des Raumes, der die Schicht (ii) bildet, abgedichtet werden.

Der Schicht (ii) kann es sich um allgemein bekannte Kunststoffe handeln, bevorzugt basiert (ii) auf Polyisocyanat-Polyadditionsprodukte. Diese Polyisocyanat-Polyadditionsprodukte, Verfahren zu ihrer Herstellung und ihre Rohstoffe sind allgemein bekannt und vielfältig beschrieben. Üblicherweise werden die Polyisocyanat-Polyadditionsprodukte hergestellt durch Umsetzung der flüssigen Ausgangsstoffe (a) Isocyanat und (b) gegenüber Isocyanaten reaktive Verbindungen. Die Ausgangskomponenten zur Herstellung des Knuststoffes werden bevorzugt in flüssiger Form in den zu befüllenden Raum zwischen (i) und (iii) gefüllt. Die Herstellung von Verbundelementen enthaltend die Schichten (i), (ii) und (iii) ist, wie eingangs anhand des Standes der Technik dargestellt, allgemein bekannt und vielfach beschrieben.

Die erfindungsgemäßen Verbundelemente weisen bevorzugt eine Breite von 0,2 m bis 5 m, bevorzugt 0,5 bis 3 m, und eine Länge von 0,5 m bis 10 m, bevorzugt 1 m bis 5 m, auf.

Die Ausgangsstoffe zur Herstellung von (ii) werden bevorzugt kontinuierlich ohne Unterbrechung in einem einzigen Arbeitsschritt in den zu befüllenden Raum zwischen (i) und (iii) eingetragen, besonders bevorzugt wird man die Ausgangsstoffe mittels einer Hochdruckapparatur über einen oder mehrere Mischköpfe eintragen, beispielsweise einfüllen.

Üblicherweise weisen die Schichten (i) und (iii) keine Merkmale auf, die zu einer Befestigung eines Ausflussendes zur Befüllung des Raumes zwischen (i) und (iii) mit Flüssigkeiten dienen können. Bei dem Ausdruck "Ausflussende" kann es sich um übliche Einrichtungen handeln, mit Hilfe derer Flüssigkeiten abgefüllt werden, beispielsweise Tankstutzen, Schlauchenden, Mischköpfe, Statikmischer oder ähnliches. Bevorzugt handelt es sich bei dem Ausflussende um einen Mischkopf. Derartige Mischköpfe sind allgemein bekannt und beispielsweise in Zusammenhang mit üblichen Dosiereinrichtungen für Polyurethansysteme kommerziell erhältlich. Die Befestigung des Ausflussendes, bevorzugt des Mischkopfes kann bevorzugt derart erfolgen, dass das Ausflussende der Fördereinrichtung oder eine Halterung für das Ausflussende der Fördereinrichtung an mindestens drei Stellen, bevorzugt drei bis sechs Stellen, besonders bevorzugt vier oder fünf Stellen mit der Schicht (i) verschraubt wird und bevorzugt abgedichtet wird. Bevorzugt wird die Flüssigkeit durch mindestens eine Öffnung (v) in (i) und/oder (iii) in den Raum zwischen (i) und (iii) gefüllt.

Das Befüllen des Raumes zwischen (i) und (iii) kann mit üblichen Fördereinrichtungen, bevorzugt kontinuierlich, durchgeführt werden, beispielsweise mit Hoch- und Niederdruckmaschinen, vorzugsweise Hochdruckmaschinen. Bevorzugt erfolgt das Befüllen mit einer Hochdruckmaschine über einen oder mehrere, bevorzugt einen Mischkopf, in dem die Ausgangskomponenten vermischt werden, in einem einzigen oder mehreren Arbeitsschritt, bevorzugt Injektionsvorgang. In einem einzigen Injektionsvorgang bedeutet, dass die Befüllung des Raumes zwischen (i) und (iii) beispielsweise mit den Ausgangsstoffen zur Herstellung von (ii) vor der vollständigen Befüllung nicht unterbrochen wird. Die Ausgangsstoffe werden somit bevorzugt in einem einzigen Schuss unter Druck in den Raum zwischen (i) und (iii) gegeben. Dies gilt insbesondere dann, wenn es sich bei der Flüssigkeit um eine reaktive Mischung handelt, die mit der Reaktion aushärtet. Bevorzugt trägt man somit die Ausgangsstoffe mittels einer Hochdruckapparatur über einen oder mehrere, bevorzugt einen Mischkopf ein. Die Befüllung des Raumes zwischen (i) und (iii) kann sowohl in vertikaler Ausrichtung von (i) und (iii), als auch in horizontaler Ausrichtung von (i) und (iii) erfolgen.

Die Schichten (i) und (iii) können bevorzugt als übliche Metallplatten, beispielsweise Eisen-, Stahl- Kupfer- und/oder Aluminium-platten, mit den erfindungsgemäßen Dicken eingesetzt werden. Bevorzugt sind Stahl oder Eisen. Es ist bevorzugt möglich, dass es sich bei der oberen Schicht (i) um die Unterseite eines Bauwerkes handelt. Diese Unterseite, d.h. die Schicht (i) kann aus mineralischen Werkstoffen, z.B. Stein, Mörtel, Putz, Zement oder bevorzugt Beton oder Metall gefertigt sein.

Sowohl (i) als auch (iii) können beschichtet, beispielsweise grundiert, geprimert, lackiert und/oder mit üblichen Kunststoffen beschichtet bei der Herstellung der erfindungsgemäßen Verbundelemente eingesetzt werden. Bevorzugt werden (i) und (iii) unbeschichtet und besonders bevorzugt beispielsweise durch übliches Sandstrahlen gereinigt eingesetzt.

Bevorzugt handelt es sich bei der oder den Öffnungen (v) um Bohrungen in (iii) mit einem Durchmesser von 0,5 bis 5,0 cm.

Der Raum, der zwischen (i) und (iii) mit den Ausgangsstoffen zur Herstellung von (ii) gefüllt wird, muss nicht den ganzen Raum zwischen (i) und (iii) darstellen. Sowohl (i) als auch (iii) können an den Rändern über (ii) überstehen, d.h. nur in einem Teilbereich von (i) und (iii) erfolgt eine Bindung von (i) über (ii) an (iii). Beispielsweise kann der Raum zwischen (i) und (iii) vor der Befüllung mit den Ausgangsstoffen derart abgedichtet werden, dass sich die Dichtung innerhalb des von (i) und (iii) umschlossenen Raumes befindet und Ränder von (i) und/oder (iii) überstehen.

Die Förderleistung kann in Abhängigkeit des zu befüllenden Volumens variiert werden. Um eine homogene Durchhärtung von (ii) zu gewährleisten, wird die Förderleistung und Fördereinrichtung bevorzugt derart gewählt, dass der zu befüllende Raum innerhalb von 0,5 bis 20 min mit den Komponenten zur Herstellung von (ii) gefüllt werden kann. Bevorzugt handelt es sich Niederdruck oder besonders bevorzugt Hochdruckmaschinen, bevorzugt mit Kolbendosierung, besonders bevorzugt Axialkolbendosierung, wobei bevorzugt der Vorratsbehälter mit Rührwerk und bevorzugt temperierbar ausgestaltet ist und bevorzugt ein Kreislauf Vorratsbehälter-Mischkopf-Vorratsbehälter vorliegt, wobei bevorzugt die Austragsleistung 0,1 bis 3,0 kg/sec beträgt.

Bevorzugt enthält die Flüssigkeit zur Herstellung von (ii) (a) Isocyanate und (b) gegenüber Isocyanaten reaktive Verbindungen. Die Schicht (ii) stellt somit bevorzugt Polyisocyanat-Polyadditionsprodukte dar. In dieser Schrift sind unter den Ausdrücken "Ausgangsstoffe" oder "Ausgangskomponenten" insbesondere (a) Isocyanate und (b) gegenüber Isocyanaten reaktive Verbindungen zu verstehen, aber gegebenenfalls, soweit sie zum Einsatz kommen, auch (c) Gase, (d) Katalysatoren, (e) Hilfsmittel und/oder (f) Treibmittel.

Bevorzugt führt man die Umsetzung von (a) mit (b) zu (ii) in Gegenwart von 1 bis 50 Volumen-% Gase (c) durch. Bevorzugt setzt man als (b) Polymerpolyole ein. Bevorzugt führt man die Umsetzung von (a) mit (b) in Gegenwart von (f) Treibmitteln durch.

Die Ausgangskomponenten zur Herstellung der Polyisocyanat-Polyadditionsprodukte werden üblicherweise bei einer Temperatur von 0 bis 100°C, vorzugsweise von 20 bis 60°C, gemischt und wie bereits beschrieben in den Raum zwischen (i) und (iii) eingebracht. Die Vermischung kann mechanisch mittels eines Rührers oder einer Rührschnecke, bevorzugt aber durch das bei Hochdruckmaschinen übliche Gegenstromprinzip erfolgen, bei dem A- und B-Komponenten-Strahl sich im Mischkopf unter jeweils hohem Druck treffen und vermischen, wobei der Strahl einer jeden Komponente auch geteilt sein kann. Die Reaktionstemperatur, d.h. die Temperatur, bei die Umsetzung erfolgt, beträgt in Abhängigkeit von der Materialdicke üblicherweise > 20°C, bevorzugt 50 bis 150°C.

Die Polyisocyanat-Polyadditionsprodukte (ii) der erfindungsgemäß hergestellten Verbundelemente weisen bevorzugt ein Elastizitätsmodul von >275 MPa im Temperaturbereich von -45 bis +50°C (nach DIN 53457), eine Adhäsion zu (i) und (iii) von >4 MPa (nach DIN 53530), eine Dehnung von >30 % im Temperaturbereich von -45 bis +50°C (nach DIN 53504), eine Zugfestigkeit von >20 MPa (nach DIN 53504) und eine Druckfestigkeit von > 20 MPa (nach DIN 53421) auf.

Die Herstellung der erfindungsgemäßen Verbundelemente kann man derart durchführen, dass man zwischen (i) und (iii) Polyisocyanat-Polyadditionsprodukte (ii), üblicherweise Polyurethane, die gegebenenfalls Harnstoff- und/oder Isocyanuratstrukturen aufweisen können, durch Umsetzung von (a) Isocyanaten mit (b) gegenüber Isocyanaten reaktiven Verbindungen gegebenenfalls in Gegenwart von Treibmitteln (f), 1 bis 50 Volumen-%, bezogen auf das Volumen der Polyisocyanat-Polyadditionsprodukte, mindestens eines Gases (c), (d) Katalysatoren und/oder (e) Hilfsmittel herstellt, wobei bevorzugt (ii) an (i) und (iii) haftet. Die Herstellung derartiger Polyisocyanat-Polyadditionsprodukte (ii) ist vielfach beschrieben worden.

Die Oberflächen von (i) und (iii) können vor der Herstellung der Verbundelemente zur Reinigung und Erhöhung der Oberflächenrauhigkeit mit Sand oder Stahlkugeln bevorzugt mit Korund oder Eisenkies gestrahlt werden. Dieses Strahlen kann nach den üblichen Verfahren erfolgen, bei denen das Strahlgut beispielsweise unter hohem Druck auf die Oberflächen auftrifft. Geeignete Apparaturen für eine solche Behandlung sind kommerziell erhältlich.

Durch diese Behandlung der Oberflächen von (i) und (iii), die nach der Umsetzung von (a) mit (b) in Kontakt mit (ii) stehen, führt zu einer deutlich verbesserten Haftung von (ii) an (i) und (iii). Das Strahlen wird bevorzugt direkt vor der Einbringung der Komponenten zur Herstellung von (ii) in den Raum zwischen (i) und (iii) durchgeführt. Die Oberflächen von (i) und (iii), an die (ii) haften soll, sind bevorzugt frei von anorganischen und/oder organischen Stoffen, die eine Haftung vermindern, beispielsweise Staub, Schmutz, Ölen und Fetten oder allgemein als Formtrennmitteln bekannten Stoffen.

Die Ausgangsstoffe (a), (b), (c), (d), (e) und (f) in dem erfindungsgemäßen Verfahren werden im Folgenden beispielhaft beschrieben:

Als Isocyanate (a) kommen die an sich bekannten aliphatischen, cycloaliphatischen, araliphatischen und/oder aromatischen Isocyanate, bevorzugt Diisocyanate in Frage, die gegebenenfalls nach allgemein bekannten Verfahren biuretisiert und/oder iscyanuratisiert worden sein können. Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5, Tetramethylendiisocyanat-1,4, Lysinesterdiisocyanate (LDI), Hexamethylendiisocyanat-1,6 (HDI), Cyclohexan-1,3- und/oder 1,4-diisocyanat, 2,4- und 2,6-Hexahydrotoluylendiisocyanat sowie die entsprechenden Isomerengemische, 4,4'-, 2,2'- und 2,4'-Dicyclohexylmethandüsocyanat sowie die entsprechenden Isomerengemische, 1-Isocyanato-3,3,5-trimethyl-5-isocyanatomethylcyclohexan (IPDI), 2,4- und/oder 2,6-Toluylendiisocyanat (TDI), 4,4'-, 2,4'- und/oder 2,2'-Diphenylmethandiisocyanat (MDI), Polyphenylpolymethylen-polyisocyanate und/oder Mischungen enthaltend mindestens zwei der genannten Isocyanate. Außerdem können Ester-, Harnstoff-, Allophanat-, Carbodiimid-, Uretdion- und/oder Urethangruppen enthaltende Di- und/oder Polyisocyanate in dem erfindungsgemäßen Verfahren eingesetzt werden. Bevorzugt werden 2,4'-, 2,2'- und/oder 4,4'-MDI und/oder Polyphenylpolymethylen-polyisocyanate eingesetzt, besonders bevorzugt Mischungen enthaltend Polyphenylpolymethylen-polyisocyanate und mindestens eines der MDI-Isomere.

Als (b) gegenüber Isocyanaten reaktive Verbindungen können beispielsweise Verbindungen eingesetzt werden, die als gegenüber Isocyanaten reaktive Gruppen Hydroxyl-, Thiol- und/oder primäre und/oder sekundäre Aminogruppen aufweisen und üblicherweise ein Moleukargewicht von 60 bis 10000 g/mol aufweisen, z.B. Polyole ausgewählt aus der Gruppe der Polymerpolyole, Polyetherpolyalkohole, Polyesterpolyalkohole, Polythioether-polyole, hydroxylgruppenhaltigen Polyacetale und hydroxylgruppenhaltigen aliphatischen Polycarbonate oder Mischungen aus mindestens zwei der genannten Polyole. Diese Verbindungen weisen üblicherweise eine Funktionalität gegenüber Isocyanaten von 2 bis 6 und ein Molekulargewicht von 400 bis 8000 auf und sind dem Fachmann allgemein bekannt.

Als Komponente (c) zur Herstellung von (ii) können allgemein bekannte Verbindungen eingesetzt werden, die einen Siedepunkt bei einem Druck von 1 bar von kleiner (d.h. bei niedrigeren Temperaturen als) -50°C aufweisen, beispielsweise Luft, Kohlendioxid, Stickstoff, Helium und/oder Neon. Bevorzugt wird Luft eingesetzt. Die Komponente (c) ist bevorzugt gegenüber der Komponente (a), besonders bevorzugt gegenüber den Komponenten (a) und (b) inert, d.h. eine Reaktivität des Gases gegenüber (a) und (b) ist kaum, bevorzugt nicht nachzuweisen. Der Einsatz des Gases (c) unterscheidet sich grundlegend von dem Einsatz üblicher Treibmittel zur Herstellung von geschäumten Polyurethanen. Während übliche Treibmittel (f) flüssig eingesetzt werden oder im Falle der gasförmigen physikalischen Treibmittel in der Polyol-Komponente bis zu einem geringen Prozentsatz löslich sind) und während der Umsetzung entweder aufgrund der Wärmeentwicklung verdampfen oder aber im Falle des Wassers aufgrund der Reaktion mit den Isocyanatgruppen gasförmiges Kohlendioxid entwickeln, wird in der vorliegenden Erfindung die Komponente (c) bevorzugt bereits gasförmig als Aerosol beispielsweise in der Polyolkomponente eingesetzt.

Als Katalysatoren (d) können allgemein bekannte Verbindungen eingesetzt werden, die die Reaktion von Isocyanaten mit den gegenüber Isocyanaten reaktiven Verbindungen stark beschleunigen, wobei vorzugsweise ein Gesamtkatalysatorgehalt von 0,001 bis 15 Gew.-%, insbesondere 0,05 bis 6 Gew.-%, bezogen auf das Gewicht der insgesamt eingesetzten gegenüber Isocyanaten reaktiven Verbindungen, verwendet wird.

Der Reaktionsmischung zur Herstellung der Polyisocyanat-Polyadidtionsprodukte (ii) können gegebenenfalls (e) Hilfsmittel einverleibt werden. Genannt seien beispielsweise Füllstoffe, oberflächenaktive Substanzen, Farbstoffe, Pigmente, Flammschutzmittel, Hydrolyseschutzmittel, fungistatische, bakteriostatisch wirkende Substanzen und Schaumstabilisatoren.

Als Treibmittel (f) können aus der Polyurethanchemie allgemein bekannte Treibmittel eingesetzt werden, beispielsweise physikalische und/oder chemische Treibmittel. Derartige physikalische Treibmittel weisen im allgemeinen einen Siedepunkt bei einem Druck von 1 bar von größer (d.h. bei höheren Temperaturen als) -50°C auf. Beispiele für physikalische Treibmittel sind z.B. FCKW, HFCKW, HFKW, aliphatische Kohlenwasserstoffe, cycloaliphatische Kohlenwasserstoffe, jeweils beispielsweise mit 4 bis 6 Kohlenstoffatomen oder Gemische dieser Stoffe, beispielsweise Trichlorfluormethan (Siedepunkt 24°C), Chlordifluormethan (Siedepunkt -40.8°C), Dichlorfluorethan (Siedepunkt 32°C), Chlordifluorethan (Siedepunkt -9.2°C), Dichlortrifluorethan (Siedepunkt 27.1°C), Terafluorethan (Siedepunkt -26.5°C), Hexafluorbutan (Siedepunkt 24.6°C), iso-Pentan (Siedepunkt 28°C), n-Pentan (Siedepunkt 36°C), Cyclopentan (Siedepunkt 49°C). Als chemische Treibmittel, d.h. Treibmittel die aufgrund einer Reaktion, beispielsweise mit Isocyanatgruppen, gasförmige Produkte bilden, kommen beispielsweise Wasser, Hydratwasser haltige Verbindungen, Carbonsäuren, tert.-Alkohole, z.B. t-Butanol, Carbamate, beispielsweise die in der Schrift EP-A 1000955, insbesondere auf den Seiten 2, Zeilen 5 bis 31 sowie Seite 3, Zeilen 21 bis 42 beschrieben Carbamate, Carbonate, z.B.-Ammoniumcarbonat und/oder Ammoniumhydrogencarbonat und/oder Guanidincarbamat in Betracht. Bevorzugt werden als Treibmittel (f) Wasser und/oder Carbamate eingesetzt.

Bevorzugt werden die Treibmittel (f) in einer Menge eingesetzt, die ausreicht, um die bevorzugte Dichte von (ii) von 350 bis 1200 kg/m³ zu erhalten. Dies kann mit einfachen Routineexperimenten, die dem Fachmann allgemein geläufig sind, ermittelt werden. Besonders bevorzugt werden die Treibmittel (f) in einer Menge von 0,05 bis 10 Gew.-%, insbesondere von 0,1 bis 5 Gew.-%, jeweils bezogen auf das Gesamtgewicht der Polyisocyanat-Polyadditionsprodukte, eingesetzt.

Das Gewicht von (ii) entspricht per Definition dem Gewicht der zur Herstellung von (ii) eingesetzten Komponenten (a), (b) und gegebenenfalls (c), (d), (e) und/oder (f).

Zur Herstellung der erfindungsgemäßen Polyisocyanat-Polyadditionsprodukte werden die Isocyanate und die gegenüber Isocyanaten reaktiven Verbindungen in solchen Mengen zur Umsetzung gebracht, dass das Äquivalenzverhältnis von NCO-Gruppen der Isocyanate (a) zur Summe der reaktiven Wasserstoffatome der gegenüber Isocyanaten reaktiven Verbindungen (b) undgegebenenfalls (f) 0,85 bis 1,25 : 1, vorzugsweise 0,95 bis 1,15 : 1 und insbesondere 1 bis 1,05 : 1, beträgt. Falls (ii) zumindest teilweise Isocyanuratgruppen gebunden enthalten, wird üblicherweise ein Verhältnis von NCO-Gruppen zur Summe der reaktiven Wasserstoffatome von 1,5 bis 60 : 1, vorzugsweise 1,5 bis 8 : 1, angewandt.

Die Polyisocyanat-Polyadditionsprodukte werden üblicherweise nach dem one shot-Verfahren oder nach dem Prepolymerverfahren, beispielsweise mit Hilfe der Hochdruck- oder Niederdruck-Technik hergestellt.

Als besonders vorteilhaft hat es sich erwiesen, nach dem Zweikomponentenverfahren zu arbeiten und die gegenüber Isocyanaten reaktiven Verbindungen (b), gegebenenfalls die Treibmittel (f) und gegebenenfalls die Katalysatoren (d) und/oder Hilfsmittel (e) in der Komponente (A) (Polyolkomponente) zu vereinigen und bevorzugt innig miteinander zu vermischen und als Komponente (B) die Isocyanate (a) zu verwenden.

Die Komponente (c) kann der Reaktionsmischung enthaltend (a), (b) und gegebenenfalls (f), (d) und/oder (e) zugeführt werden, und/oder den einzelnen, bereits beschriebenen Komponenten (a), (b), (A) und/oder (B). Die Komponente, die mit (c) gemischt wird, liegt üblicherweise flüssig vor. Bevorzugt wird die Komponenten in die Komponente (b) gemischt.

Das Mischen der entsprechenden Komponente mit (c) kann nach allgemein bekannten Verfahren erfolgen. Beispielsweise kann (c) durch allgemein bekannte Beladungseinrichtungen, beispielsweise Luftbeladungseinrichtungen, bevorzugt unter Druck, beispielsweise aus einem Druckbehälter oder durch einen Kompressor komprimiert, z.B. durch eine Düse der entsprechenden Komponente zugeführt werden. Bevorzugt erfolgt eine weitgehende Durchmischung der entsprechende Komponenten mit (c), so dass Gasblasen von (c) in der üblicherweise flüssigen Komponente bevorzugt eine Größe von 0,0001 bis 10, besonders bevorzugt 0,0001 bis 1 mm aufweisen.

Der Gehalt an (c) in der Reaktionsmischung zur Herstellung von (ii) kann in der Rücklaufleitung der Hochdruckmaschine mit allgemein bekannten Messgeräten über die Dichte der Reaktionsmischung bestimmt werden. Die Gehalt an (c) in der Reaktionsmischung kann über eine Kontrolleinheit bevorzugt automatisch auf der Grundlage dieser Dichte reguliert werden. Die Komponentendichte kann während der üblichen Zirkulation des Materials in der Maschine auch bei sehr niedriger Zirkulationsgeschwindigkeit online bestimmt und reguliert werden.

Die erfindungsgemäß erhältlichen Verbundelemente finden Verwendung vor allem in Bereichen, in denen Konstruktionselemente benötigt werden, die großen Kräften standhalten, beispielsweise als Konstruktionsteile im Schiffsbau, z.B. in Schiffsrümpfen, beispielsweise Schiffsdoppelrümpfe mit einer äußeren und einer inneren Wand, und Laderaumabdeckungen, Laderaumtrennwänden, Ladeklappen oder in Bauwerken, beispielsweise Brücken oder als Konstruktionselemente im Hausbau, insbesondere in Hochhäusern.

Die erfindungsgemäßen Verbundelemente sind nicht mit klassischen Sandwichelementen zu verwechseln, die als Kern einen Polyurethan- und/oder Polyisocyanurathartschaumstoff enthalten und üblicherweise zur thermischen Isolierung eingesetzt werden. Derartige bekannte Sandwichelemente wären aufgrund ihrer vergleichsweise geringeren mechanischen Belastbarkeit nicht für die genannten Anwendungsbereiche geeignet.

## Patentansprüche

1. Verfahren zur Herstellung von Verbundelementen, die die folgende Schichtstruktur aufweisen:
(i) 1 mm bis 20 mm Metall, Kunststoff oder mineralischer Werkstoff,
(ii) 5 mm bis 300 mm Kunststoff,
(iii) 1 mm bis 20 mm Metall,
**dadurch gekennzeichnet, dass** man in den Raum, der zwischen der im wesentlichen horizontal ausgerichteten oberen Schicht (i) und der im wesentlichen horizontal ausgerichteten unteren Schicht (iii) gebildet wird, durch mindestens eine Öffnung (v) in der unteren Schicht (iii) flüssige Ausgangskomponenten zur Herstellung von (ii) füllt und die von den flüssigen Ausgangskomponenten verdrängte Luft durch mindestens eine weitere Öffnung (iv) in der unteren Schicht (iii) entweicht, wobei an dem Rand der Öffnung (iv) eine Wand (x) befestigt ist, deren obere Kante sich bis auf eine Entfernung zwischen 0 mm und 6 mm der zur Schicht (ii) gerichteten Oberfläche der oberen Schicht (i) nähert wobei zwischen der oberen Kante der Wand (x) und der zur Schicht (ii) gerichteten Oberfläche der Schicht (i) eine Öffnung verbleibt, durch die die verdrängte Luft entweichen kann.

2. Verfahren gemäß Anspruch 1, **dadurch gekennzeichnet, dass** es sich bei der Schicht (i) um die Unterseite eines existierenden Bauwerkes handelt.

3. Verfahren gemäß Anspruch 1, **dadurch gekennzeichnet, dass** es sich bei der Wand um ein Rohr handelt, das in die Öffnung (iv) geschoben und anschließend dicht mit der Kante der Öffnung (iv) verbunden wird.

4. Verfahren gemäß Anspruch 3, **dadurch gekennzeichnet, dass** man das Rohr mit der Schicht (iii) verschweißt.

5. Verfahren gemäß Anspruch 1, **dadurch gekennzeichnet, dass** es sich bei der Wand um ein Rohr handelt, das in die Öffnung (iv) geschraubt wird.

6. Verfahren gemäß Anspruch 1, **dadurch gekennzeichnet, dass** die Öffnung (iv) einen Durchmesser zwischen 8 mm und 30 mm aufweist.

7. Verfahren gemäß Anspruch 1, **dadurch gekennzeichnet, dass** (ii) Polyisocyanat-Polyadditionsprodukte darstellen erhältlich durch Umsetzung der flüssigen Ausgangsstoffe (a) Isocyanat und (b) gegenüber Isocyanaten reaktive Verbindungen.

8. Verbundelemente erhältlich durch ein Verfahren gemäß einem der Ansprüche 1 bis 7.

## Claims

1. A process for the production of composite elements which have the following layer structure:
(i) from 1 mm to 20 mm of metal, plastic or mineral material,
(ii) from 5 mm to 300 mm of plastic,
(iii) from 1 mm to 20 mm of metal,
wherein liquid starting components for the production of (ii) are introduced into the space which is formed between the substantially horizontally oriented upper layer (i) and the substantially horizontally oriented lower layer (iii), through at least one orifice (v) in the lower layer (iii), and the air displaced by the liquid starting components escapes through at least one further orifice (iv) in the lower layer (iii), a wall (x) whose upper edge approaches up to a distance of from 0 mm to 6 mm from that surface of the upper layer (i) which faces the layer (ii) being fastened to the edge of the orifice (iv), an orifice through which the displaced air can escape remaining between the upper edge of the wall (x) and that surface of the layer (i) which faces the layer (ii).

2. The process according to claim 1, wherein the layer (i) is the underside of an existing structure.

3. The process according to claim 1, wherein the wall is a pipe which is pushed into the orifice (iv) and then tightly connected to the edge of the orifice (iv).

4. The process according to claim 3, wherein the pipe is welded to the layer (iii).

5. The process according to claim 1, wherein the wall is a pipe which is screwed into the orifice (iv).

6. The process according to claim 1, wherein the orifice (iv) has a diameter of from 8 mm to 30 mm.

7. The process according to claim 1, wherein (ii) are polyisocyanate polyadducts obtainable by reacting the liquid starting materials (a) isocyanate and (b) compounds reactive toward isocyanates.

8. A composite element obtainable by a process according to any of claims 1 to 7.

## Revendications

1. Procédé de préparation d'éléments composites, présentant la structure stratifiée suivante :
(i) 1 mm à 20 mm de métal, de matière synthétique ou d'un matériau minéral,
(ii)5 mm à 300 mm de matière synthétique,
(iii) 1 mm à 20 mm de métal,
**caractérisé en ce que** l'espace formé entre la couche supérieure (i) essentiellement alignée horizontalement et la couche inférieure (iii) essentiellement alignée horizontalement est rempli, par au moins une ouverture (v) dans la couche inférieure (iii), de composants de départ liquides pour la formation de (ii), l'air refoulé par les composants de départ liquides s'échappant par au moins une autre ouverture (iv) dans la couche inférieure (iii), une paroi (x) étant fixée au bord de l'ouverture (iv), le bord supérieur de laquelle approchant à une distance de 0 à 6 mm de la surface de la couche supérieure (i) dirigée vers la couche (ii), et il demeure entre le bord supérieur de la paroi (x) et la surface de la couche (i) dirigée vers la couche (ii) une ouverture par laquelle l'air refoulé peut se dégager.

2. Procédé suivant la revendication 1, **caractérisé en ce que** la couche (i) est la face inférieure d'une construction existante.

3. Procédé suivant la revendication 1, **caractérisé en ce que** la paroi est un tube, qui est introduit dans l'ouverture (iv) et relié ensuite de manière étanche au bord de l'ouverture (iv).

4. Procédé suivant la revendication 1, **caractérisé en ce que** le tube est soudé à la couche (iii).

5. Procédé suivant la revendication 1, **caractérisé en ce que** la paroi est un tube vissé dans l'ouverture (iv).

6. Procédé suivant la revendication 1, **caractérisé en ce que** l'ouverture (iv) présente un diamètre de 8 à 30 mm.

7. Procédé suivant la revendication 1, **caractérisé en ce que** (ii) consiste en produits de polyaddition de polyisocyanates que l'on peut obtenir par réaction des substances de départ liquides d'isocyanate (a) et de composés (b) réactifs aux isocyanates.

8. Eléments composites que l'on peut obtenir par un procédé suivant l'une quelconque des revendications 1 à 7.
